(19) Europäisches Patentamt
European Patent Office
Office européen des brevets

(11) **EP 2 631 725 A1**

(12) **EUROPÄISCHE PATENTANMELDUNG**

(43) Veröffentlichungstag:
28.08.2013  Patentblatt 2013/35

(51) Int Cl.:
*G05B 23/02* (2006.01)       *H02J 1/10* (2006.01)

(21) Anmeldenummer: **12157159.0**

(22) Anmeldetag: **27.02.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder: **Kort, Valentin**
**76829 Landau (DE)**

(54) **Verfahren zur Ermittlung der aktuellen Leistungsabgabe der Stromversorgungseinheiten eines Automatisierungssystems**

(57)  Die Erfindung betrifft ein Verfahren zum Betreiben eines Automatisierungsgerätes, welches zur Steuerung eines technischen Prozesses vorgesehen ist und eine Vielzahl von Quellen-und Senkenmodulen (4, 5, 6; 8, 9, 10, ... N) aufweist, wobei die Quellenmodule (4, 5, 6) jeweils mit einem an einen Bus (2) angeschlossenen Lastverteilungs-Controller (3) versehen sind, wobei die Kennlinien (1) dieser Controller (3) den auf die Nennleistung des jeweiligen Quellenmoduls (4, 5, 6) bezogenen Auslastungsgrad (L) dieses Quellenmoduls (4, 5, 6) in Abhängigkeit einer an diesem Bus (2) anliegenden Spannung ($U_{LS}$) repräsentiert. Es werden Maßnahmen vorgeschlagen, mittels welchen einem Anwender ein schneller Überblick bezüglich der Gesamt-Leistungsabgabe des Automatisierungsgerätes ermöglicht wird.

FIG 2

**Beschreibung**

Verfahren zum Betreiben eines Automatisierungsgerätes

Die Erfindung betrifft ein Verfahren zum Betreiben eines Automatisierungsgerätes, welches zur Steuerung eines technischen Prozesses vorgesehen ist und eine Vielzahl von Quellen-und Senkenmodulen aufweist, wobei die Quellenmodule jeweils mit einem an einen Bus angeschlossenen Lastverteilungs-Controller versehen sind, wobei die Kennlinien dieser Controller den auf die Nennleistung des jeweiligen Quellenmoduls bezogenen Auslastungsgrad dieses Quellenmoduls in Abhängigkeit einer an diesem Bus anliegenden Spannung repräsentiert. Ferner betrifft die Erfindung ein Automatisierungsgerät zur Durchführung des Verfahrens sowie eine Auswerteeinheit für ein derartiges Automatisierungsgerät.

Häufig sind parallel geschaltete Stromversorgungen jeweils mit so genannten Loadshore-Controllern versehen, welche dazu vorgesehen sind, die Auslastung der Stromversorgungen zu symmetrieren. Für den Fall, dass sich die Leistungsabgabe einer der Stromversorgungen des Automatisierungsgerätes erhöht, z. B. weil eine weitere Baugruppe diesem Automatisierungsgerät hinzugefügt wird oder eine bereits vorhandene Baugruppe von einem STOPP- in einen RUN-Betrieb schaltet, führt dies nur kurzzeitig zu einer unsymmetrischen Lastverteilung; denn die genannten Controller bewerkstelligen unverzüglich eine symmetrische Lastverteilung, z. B. in der Art, dass jede der Stromversorgungen 80 % oder 100 % seiner Nennleistung zur Versorgung des Automatisierungsgerätes mit elektrischer Energie abgibt.

Es kann nun vorkommen, dass aufgrund einer Funktionserweiterung ein Anwender weitere Baugruppen dem Automatisierungsgerät hinzufügt, dieses allerdings im Hinblick auf die Leistungsabgaben der Stromversorgungen voll ausgelastet ist. Dies bedeutet, dass der Steuerbetrieb des Automatisierungsgerätes gestört werden könnte, falls das Automatisierungsgerät mit diesen Baugruppen erweitert werden würde.

Der Erfindung liegt daher die Aufgabe zugrunde, ein Verfahren der eingangs genannten Art anzugeben, welche einem Anwender einen schnellen Überblick bezüglich der Auslastung des Automatisierungsgerätes verschafft. Darüber hinaus ist ein Automatisierungsgerät zu Durchführung des Verfahren und eine Auswerteeinheit für ein derartiges Automatisierungsgerät zu schaffen.

Diese Aufgabe wird im Hinblick auf das Verfahren durch die im kennzeichnenden Teil des Anspruch 1 angegebenen, bezüglich des Automatisierungsgerätes durch die im kennzeichnenden Teil des Anspruchs 2 und im Bezug auf die Auswerteeinheit durch die im kennzeichnenden Teil des Anspruchs 3 angegebenen Maßnahmen gelöst.

Die Erfindung geht von der Idee aus, die ohnehin in jedem Quellenmodul bzw. in jeder Stromversorgungseinheit hinterlegten Kennlinie eines Lastverteilungs-Controllers, welche den auf die Nennleistung des jeweiligen Quellenmoduls bezogenen prozentualen Auslastungsgrad dieses Quellenmoduls in Abhängigkeit einer an diesem Bus anliegenden Spannung repräsentiert, zur Ermittlung der aktuellen Gesamt-Leistungsabgabe zu nutzen. Die Verläufe dieser Kennlinien sind identisch und es genügt daher, eine dieser Kennlinien in der Auswerteeinheit zu hinterlegen. Eine erfasste Spannung repräsentiert für jedes der Quellenmodule einen bestimmten Auslastungsgrad, z. B. einen Auslastungsgrad von 120 %, was bedeutet, dass beispielsweise ein Quellenmodul mit einer Nennleistung von 60 W aktuell 72 W, ein Quellenmodul mit einer Nennleistung von 10 W aktuell 12 W liefert und dem Anwender eine aktuelle Gesamt-Leistungsabgabe von 84 W angezeigt wird. In diesem Fall erkennt der Anwender, dass das Automatisierungsgerät im Hinblick auf die Stromversorgung bereits überlastet ist; denn die aktuelle Gesamt-Leistungsabgabe von 84 W überschreitet bereits während dieses Betriebszustandes die verfügbare Gesamt-Leistungsabgabe (Nennleistungsabgabe) von 70 W. Vorteilhaft ist, dass nicht jedes Quellenmodul bzw. nicht jede Stromversorgung ihre Abgabeleistung erfassen und einer Auswerteeinheit übermitteln muss, z. B. einer Auswerteeinheit in Form einer CPU-Einheit, um die aktuelle Gesamt-Leistungsabgabe aller Quellenmodule zu ermitteln und anzuzeigen. Dadurch wird der Aufwand im Hinblick auf die Datenerfassung und die Kommunikationslast vermindert.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

Figur 1 eine Kennlinie eines Lastverteilungs-Controllers einer Stromversorgung und
Figur 2 ein Prinzipschaltbild von Bestandteilen eines Automatisierungsgerätes.

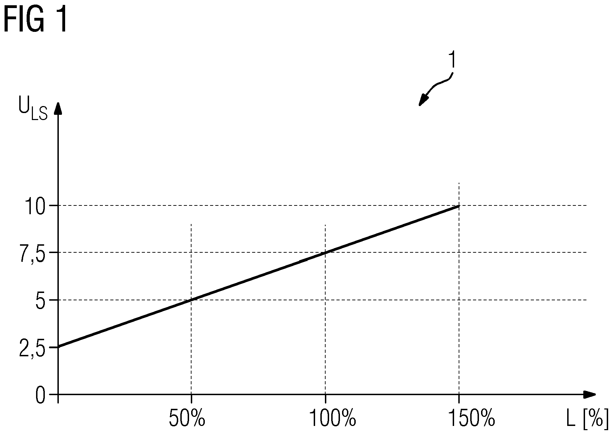

In Figur 1 ist mit 1 eine Kennlinie eines Lastverteilungs-Controllers (Loadshare-Controllers) bezeichnet, welche einen auf die Nennleistung eines Quellenmoduls bezogenen prozentualen Auslastungsgrad L des Quellenmoduls in Abhängigkeit einer Spannung $U_{LS}$ darstellt. Der Auslastungsgrad L des Quellenmoduls ergibt sich zu:

$$L = \frac{aktuelle\ Leistungsabgabe}{Nennleistung} \times 100\ \%$$

Die Spannung $U_{LS}$ wird von einer Auswerteeinheit an einem so genannten Loadshare-Bus (LS-Bus) erfasst, an welchen alle Lastverteilungs-Controller von Quellenmodulen eines Automatisierungsgerätes angeschlossen sind. Eine derartige Kennlinie 1 sowie Informationen über die verfügbare Nennleistung dieser an dem LS-Bus angeschlossenen Quellenmodule sind in der Auswerteeinheit hinterlegt. Die Auswerteeinheit ermittelt - wie im Folgenden noch gezeigt wird - aus den Nennleistungen, aus der Kennlinie 1 und aus einer während des Steuerbetriebs des Automatisierungsgerätes von der Auswerteeinheit an dem LS-Bus erfassten Spannung die aktuelle Gesamt-Leistungsabgabe der Quellenmodule und zeigt diese einem Anwender an.

Die Informationen über die jeweilige verfügbare Nennleistung bzw. jeweilige verfügbare Leistungsabgabe der Quellenmodule können beispielsweise im Rahmen der Projektierung des Automatisierungsgerätes ermittelt und in die Auswerteeinheit hinterlegt werden. Auch ist es möglich, dass die Auswerteeinheit die jeweilige in der Auswerteeinheit zu hinterlegende Information bezüglich der Nennleistung aus einem Speicher des jeweiligen Quellenmoduls ausliest.

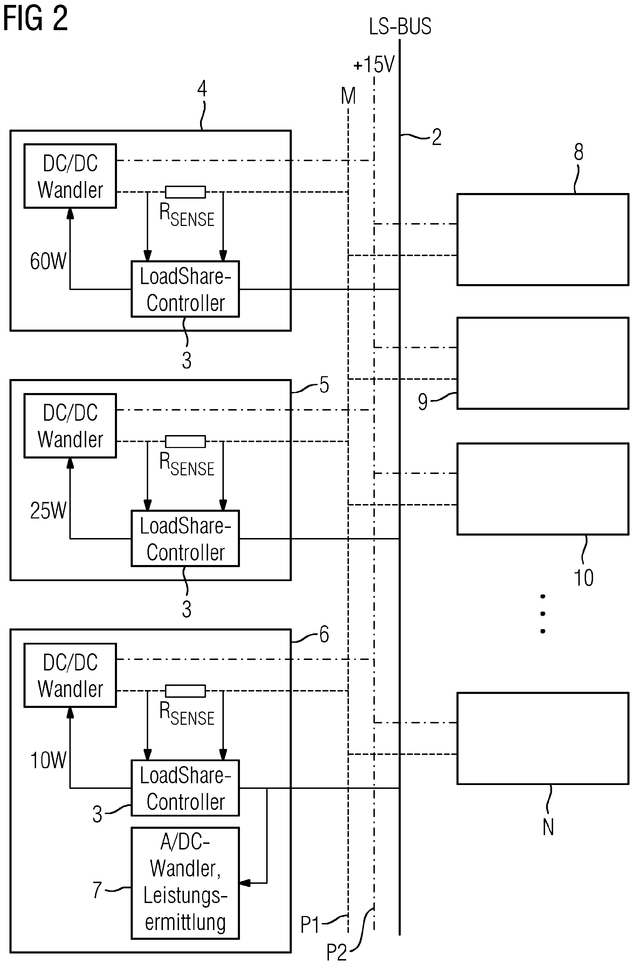

Im Folgenden wird auf Figur 2 verwiesen, in der ein Prinzipschaltbild von Bestandteilen eines Automatisierungsgerätes dargestellt ist.

An einen LS-Bus 2 sind Lastverteilungs-Controller 3 von Quellenmodulen 4, 5, 6 angeschlossen, wobei das Quellenmodul 6 als CPU-Modul des Automatisierungsgerätes ausgebildet und mit einer Auswerteeinheit 7 versehen ist. Die Quellenmodule 4, 5, 6 versorgen Senkenmodule 8, 9, 10, ... N mit elektrischer Leistung, wobei sowohl die Quellen- als auch die Senkenmodule an Potentialleitungen P1, P2 angeschlossen sind. Die Senkenmodule 8, 9, 10, ... N sind beispielsweise als analoge oder als digitale Ein-/Ausgabebaugruppen ausgebildet.

Es wird im Folgenden angenommen, dass die Kennlinie 1 (Figur 1) in der Auswerteeinheit 7 hinterlegt ist und diese mit einem A/D-Wandler versehene Auswerteeinheit 7 während des Steuerbetriebes des Automatisierungsgerätes eine aktuell am LS-Bus 2 anliegende Spannung $U_{LS}$ von 5 V erfasst. Ferner wird angenommen, dass die Auswerteeinheit 7 aus hier nicht dargestellten Speichern der Quellenmodule 4, 5, 6 die Informationen über die jeweilig verfügbare Nennleistung der Quellenmodule 4, 5, 6 über einen ebenfalls hier nicht dargestellten Rückwandbus des Automatisierungsgerätes ausgelesen hat.

Für den Fall, dass das Quellenmodul 4 für eine Nennleistung von 60 W, das Quellenmodul 5 für eine Nennleistung von 25 W und das CPU-Modul 6 für eine Nennleistung von 10 W ausgelegt ist, ermittelt die Auswerteeinheit 7 mittels der Kennlinie 1 (Figur 1) und der aktuell erfassten Spannung $U_{LS}$ am LS-Bus 2 einen Auslastungsgrad L von 50 %. Dies bedeutet, dass alle Quellenmodule 4, 5, 6 aktuell ihre jeweiligen Nennleistungen 30 W, 12,5 W und 5 W bereitstellen und demnach die Auswerteeinheit 7 eine aktuelle Gesamt-Leistungsabgabe von 47,5 W errechnet und einem Anwender z. B auf einer Anzeigeinheit meldet.

Für den Fall, dass die Auswerteeinheit 7 eine aktuell am LS-Bus 2 anliegende Spannung $U_{LS}$ von 7,5 V erfasst, weist dies darauf hin, dass die aktuelle Quellenmodule 4, 5, 6 eine Gesamt-Leistung von 95 W abgeben. Dies bedeutet, dass die Belastungsgrenze der Quellenmodule 4, 5, 6 erreicht ist und keine Leistungsreserve bereitgestellt werden kann.

Die Erfindung lässt sich damit wie folgt zusammenfassen:

Ein Verfahren zum Betreiben eines Automatisierungsgerätes, welches zur Steuerung eines technischen Prozesses vorgesehen ist und eine Vielzahl von Quellen- und Senkenmodulen 4, 5, 6, 8, 9, 10, ... N aufweist, wobei die Quellenmodule 4, 5, 6 jeweils mit einem an einen Bus 2 angeschlossenen Lastverteilungs-Controller 3 versehen sind, wobei die Kennlinien 1 dieser Controller 3 den auf die Nennleistung des jeweiligen Quellenmoduls 4, 5, 6 bezogenen Auslastungsgrad L dieses Quellenmoduls 4, 5, 6 in Abhängigkeit einer an diesem Bus (2) anliegenden Spannung $U_{LS}$ repräsentiert, zeichnet sich dadurch aus, dass in einer Auswerteeinheit 7 Informationen über die verfügbare Nennleistung der Quellenmodule 4, 5, 6 und eine der Kennlinien 1 hinterlegt werden, wobei von der Auswerteeinheit 7 mittels dieser Nennleistungen, der Kennlinie 1 und einer während des Steuerbetriebs von der Auswerteeinheit 7 am Bus 2 erfassten Spannung $U_{LS}$ die aktuelle Gesamt-Leistungsabgabe der Quellenmodule 4, 5, 6 ermittelt und angezeigt wird.

Dadurch wird einem Anwender ein schneller Überblick bezüglich der Gesamt-Leistungsabgabe des Automatisierungsgerätes ermöglicht.

**Patentansprüche**

1. Verfahren zum Betreiben eines Automatisierungsgerätes, welches zur Steuerung eines technischen Prozesses vorgesehen ist und eine Vielzahl von Quellen- und Senkenmodulen (4, 5, 6; 8, 9, 10, ... N) aufweist, wobei die Quellenmodule (4, 5, 6) jeweils mit einem an einen Bus (2) angeschlossenen Lastverteilungs-Controller (3) versehen sind, wobei die Kennlinien (1) dieser Controller (3) den auf die Nennleistung des jeweiligen Quellenmoduls (4, 5, 6) bezogenen Auslastungsgrad (L) dieses Quellenmoduls (4, 5, 6) in Abhängigkeit einer an diesem Bus (2) anliegenden Spannung ($U_{LS}$) repräsentiert, **dadurch gekennzeichnet, dass** in einer Auswerteeinheit (7) Informationen über die verfügbare Nennleistung der Quellenmodule (4, 5, 6) und eine der Kennlinien (1) hinterlegt werden, wobei von der Auswerteeinheit (7) mittels dieser Nennleistungen, der Kennlinie (1) und einer während des Steuerbetriebs von der Auswerteeinheit (7) am Bus (2) erfassten Spannung ($U_{LS}$) die aktuelle Gesamt-Leistungsabgabe der Quellenmodule (4, 5, 6) ermittelt und angezeigt wird.

2. Automatisierungsgerät, welches zur Steuerung eines technischen Prozesses vorgesehen ist und eine Vielzahl von Quellen-und Senkenmodulen (4, 5, 6; 8, 9, 10, ... N) aufweist, wobei die Quellenmodule (4, 5, 6) jeweils mit einem an einen Bus (2) angeschlossenen Lastverteilungs-Controller (3) versehen sind, wobei Kennlinien (1) dieser Controller (3) den auf die Nennleistung des jeweiligen Quellenmoduls (4, 5, 6) bezogenen Auslastungsgrad dieses Quellenmoduls (4, 5, 6) in Abhängigkeit einer an diesem Bus (2) anliegenden Spannung ($U_{LS}$) repräsentieren, **dadurch gekennzeichnet, dass** in einer Auswerteeinheit (7) Informationen über die verfügbare Nennleistung der Quellenmodule (4, 5, 6) und eine der Kennlinien (1) hinterlegt sind und die Auswerteeinheit (7) dazu ausgebildet ist, während des Steuerbetriebs die am Bus (2) anliegende Spannung ($U_{LS}$) zu erfassen und aus dieser Spannung($U_{LS}$), diesen Nennleistungen und der hinterlegten Kennlinie (1) die aktuelle Gesamt-Leistungsabgabe der Quellenmodule (4, 5, 6) zu ermitteln und anzuzeigen.

3. Auswerteeinheit für ein Automatisierungsgerät, welches zur Steuerung eines technischen Prozesses vorgesehen ist und eine Vielzahl von Quellen- und Senkenmodulen (4, 5, 6; 8, 9, 10, ... N) aufweist, wobei die Quellenmodule (4, 5, 6) jeweils mit einem an einen Bus (2) angeschlossenen Lastverteilungs-Controller (3) versehen sind, wobei Kennlinien (1) dieser Controller (3) den auf die Nennleistung des jeweiligen Quellenmoduls (4, 5, 6) bezogenen Auslastungsgrad dieses Quellenmoduls (4, 5, 6) in Abhängigkeit einer an diesem Bus (2) anliegenden Spannung ($U_{LS}$) repräsentiert, **dadurch gekennzeichnet, dass** in der Auswerteeinheit (7) Informationen über die verfügbare Nennleistung der Quellenmodule (4, 5, 6) und eine der Kennlinien (1) hinterlegt sind und die Auswerteeinheit (7) dazu ausgebildet ist, während des Steuerbetriebs die am Bus (2) anliegende Spannung ($U_{LS}$) zu erfassen und aus dieser Spannung ($U_{LS}$), diesen Nennleistungen und der hinterlegten Kennlinie (1) die aktuelle Gesamt-Leistungsabgabe der Quellenmodule (4, 5 6) zu ermitteln und anzuzeigen.

## FIG 1

# FIG 2

Europäisches
Patentamt

European
Patent Office

Office européen
des brevets

**EUROPÄISCHER RECHERCHENBERICHT**

Nummer der Anmeldung

EP 12 15 7159

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | H. Lindner ET AL: "Elektrotechnik - Elektronik: Formeln und Gesetze, Kap. 1.3.3 Berechnung von Netzwerken" In: "Elektrotechnik - Elektronik: Formeln und Gesetze, Kap. 1.3.3 Berechnung von Netzwerken", 31. Dezember 1990 (1990-12-31), Buch- und Zeit- Verlagsgesellschaft mbH Köln, XP55028481, ISBN: 978-3-70-424040-8 Seiten 30-35, * das ganze Dokument * ----- | 1-3 | INV. G05B23/02 H02J1/10 |
| X | US 4 539 487 A (ISHII TETSUO [JP]) 3. September 1985 (1985-09-03) * das ganze Dokument * ----- | 1-3 | |
| X | DE 10 2006 001984 A1 (BOSCH GMBH ROBERT [DE]) 19. Juli 2007 (2007-07-19) * das ganze Dokument * ----- | 1-3 | |
| X | US 6 735 704 B1 (BUTKA DAVID [US] ET AL) 11. Mai 2004 (2004-05-11) * das ganze Dokument * ----- | 1-3 | RECHERCHIERTE SACHGEBIETE (IPC) G05B H02J |

Der vorliegende Recherchenbericht wurde für alle Patentansprüche erstellt

| Recherchenort | Abschlußdatum der Recherche | Prüfer |
|---|---|---|
| Den Haag | 30. Mai 2012 | Patsiopoulos, N |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
Dokument

EPO FORM 1503 03.82 (P04C03)

**EP 2 631 725 A1**

**ANHANG ZUM EUROPÄISCHEN RECHERCHENBERICHT**
**ÜBER DIE EUROPÄISCHE PATENTANMELDUNG NR.**   EP 12 15 7159

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-05-2012

| Im Recherchenbericht angeführtes Patentdokument | Datum der Veröffentlichung | Mitglied(er) der Patentfamilie | Datum der Veröffentlichung |
|---|---|---|---|
| US 4539487 A | 03-09-1985 | DE 3332727 A1<br>GB 2132040 A<br>JP 59099930 A<br>SU 1306490 A3<br>US 4539487 A | 30-05-1984<br>27-06-1984<br>08-06-1984<br>23-04-1987<br>03-09-1985 |
| DE 102006001984 A1 | 19-07-2007 | DE 102006001984 A1<br>EP 1980004 A2<br>US 2010007207 A1<br>WO 2007082850 A2 | 19-07-2007<br>15-10-2008<br>14-01-2010<br>26-07-2007 |
| US 6735704 B1 | 11-05-2004 | KEINE | |

EPO FORM P0461

Für nähere Einzelheiten zu diesem Anhang : siehe Amtsblatt des Europäischen Patentamts, Nr.12/82